# EUROPÄISCHE PATENTANMELDUNG

(11) **EP 0 847 162 A1**
(43) Veröffentlichungstag der Anmeldung: **10.06.1998**
(21) Anmeldenummer: 96119169.9
(22) Anmeldetag: 29.11.1996
(51) Int. Cl.: H04L 9/00

(54) **Schnittstelleneinheit mit Verschachtelung zur Übertragung von digitalen Daten über ein zellulares Kommunikationsnetz**

(71) Anmelder: Landis & Gyr Technology Innovation AG, 6301 Zug (CH)
(72) Erfinder: Fischer, Peter, 6331 Hünenberg (CH); Fogg, Andrew, Sandy, Bedfordshire SG19 3AD (GB)

(57) **Zusammenfassung**

Eine Schnittstelleneinheit (1) zur bidirektionalen Übertragung von digitalen Daten zwischen der Schnittstelleneinheit (1) und einer über ein zellulares Kommunikationsnetz (3) erreichbaren Station (8) weist Mittel auf, mit denen digitale Daten paketweise über das zellulare Kommunikationsnetz (3) übertragbar sind. Weiter umfasst die Schnittstelleneinheit Mittel, durch welche die Daten in mehrere Dateneinheiten (Bursts) aufteilbar und verschachtelbar (interleaved) sind, wobei die Verschachtelungstiefe (interleaving depth) mindestens zwei, jedoch kleiner oder gleich neun ist.

## Beschreibung

Die Erfindung bezieht sich auf eine Schnittstelleneinheit gemäss dem Oberbegriff des Anspruchs 1.

Solche Schnittstelleneinheiten eignen sich beispielsweise zur Abfrage von Messdaten eines Elektrizitätszählers und zur Übertragung der Messdaten über ein zellulares Kommunikationsnetz hin zu einer Auswertestation, in der die Messdaten zur Verrechnung von Energiekosten verwendet werden. Im weiteren ist eine Schnittstelleneinrichtung dieser Art allgemein zur Bedienung von Geräten oder Anlagen wie etwa Gaszähler, Regler oder Leitsysteme der Heizungs-, Lüftungs- und Klimatechnik, Einrichtungen zur Minimierung von Lastspitzen in Energieverteilsystemen, Verkaufsautomaten, Payphones, Pay-TV-Apparate, Zutrittskontrollsysteme oder Überwachungsanlagen einsetzbar.

Im allgemeinen werden solche Schnittstelle immer in Gebäuden oder gebäudeähnlichen Strukturen benutzt.

Es ist eine Schnittstelleneinrichtung der im Oberbegriff des Anspruchs 1 genannten Art bekannt (US 5 546 444), bei der Daten eines Gerätes von einer Radiotelefonstation aus über ein zellulares Radionetz geleitet werden. Dabei werden die Daten des Gerätes in einem gewissen Datentelegramm integriert, welches auch zur Identifizierung der Radiotelefonstation im zelluaren Radionetz dient.

Es ist auch bekannt (WO 93/04451), Messdaten mehrere Messstationen eines Gebietes von einer Stelle aus abzufragen und die im Gebiet gesammelten Daten über ein öffentliches Kommunikationsnetz an eine Zentrale zu übermitteln.

Es ist weiter ein Alarmsystem bekannt (US 4 993 059), bei dem Signale eines Alarmsensors über ein Radiotelefonnetz an eine Zentrale übermittelt werden.

Es sind auch Art und Verwendbarkeit verschiedenartiger zellularer Radionetze bekannt und zu einem grossen Teil auch genormt. Bekannte Normen sind beispielsweise DCS1800, NMT 900, IS 95-CDMA, JTACS, WAGS, CT-2, ESMR, RC2000, NMT450, ETACS und TACS. So ist auch ein sogenannter GSM Standard bekannt (Michel Mouly, Marie-Bernadette Pautet: The GSM System For Mobile Communications, 1992), der insbesondere auch in Europa angewandt wird.
Bekannte Anwendungen zelluarer Kommunikationsnetze beschreiben lediglich telefonorientierte Anwendungen.
Insbesondere folgende Ziele sollen durch eine Übertragungseinrichtung mit zelluarem Neztwerk erfüllt werden:
- Die Übermittlungskosten und Fertigungskosten für die Schnittstelleneinrichtung für Daten sollen erwartungsgemäss etwa um einen Faktor 10 gesenkt werden, gegenüber einer Übertragung über Telefonleitungen.
- Pro Zelle des Kommunikationsnetzes wird erwartet, dass eine wesentlich höhere Anzahl Schnittstelleneinheiten bedienbar ist; beispielsweise wird eine 10-fache Erhöhung der Anzahl gefordert.
- Die Zuverlässigkeit soll gegenüber einer Übertragung über Telefonleitungen erhöht werden.

Der Erfindung liegt die Aufgabe zugrunde, eine kostengünstige und zuverlässige Schittstelleneinrichtung für ein zellulares Radionetz zu schaffen, durch welche eine hohe Sicherheit auch bezüglich Authentizität und Anonymität der übertragenen Daten erreichbar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein zellulares Kommunikationsnetz mit zwei Exemplaren einer Schnittstelleneinheit,
- Fig. 2: den prinzipiellen Aufbau der Schnittstelleneinheit,
- Fig. 3: eine Variante der Schnittstelleneinheit, welche mit mehreren Geräten verbunden ist,
- Fig. 4: ein Datenflussdiagramm zu einem vorteilhaften Aufbereitungsverfahren von Datenströmen,
- Fig. 5: eine Tabelle zum Prinzip des Aufbereitungsverfahrens,
- Fig. 6: ein Diagramm zu einem adaptiven Verarbeitungsverfahren für mehrere zeitlich nacheinander anfallende Signaleinheiten und
- Fig. 7: ein Datenflussdiagramm zum adaptiven Verarbeitungsverfahren.

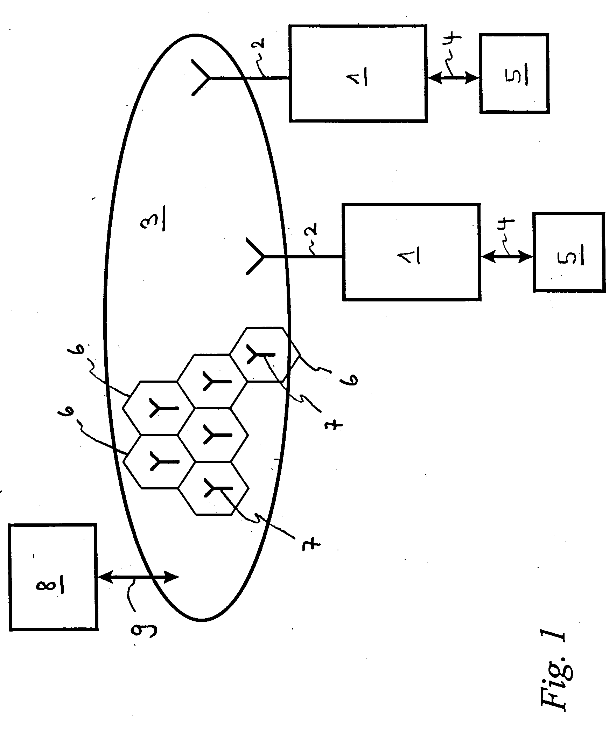

In der Fig. 1 bedeutet 1 eine Schnittstelleneinheit, die einerseits über eine Antenne 2 an ein zellulares Kommunikationsnetz 3 angeschlossen und andererseits über ein Verbindungsmittel 4 mit mindestens einem Modul 5 verbindbar ist.

Das Modul 5 ist eine steuerbare Einrichtung oder ein steuerbares Gerät, beispielsweise ein Elektrizitäts- oder ein Gaszähler, eine Leitstelle eines Gebäudeüberwachungssystems oder auch ein Verkaufssystem für Waren oder Dienstleistungen.

In bekannter Art weist das zellulare Kommunikationsnetz 3 mehrere Kommunikationszellen 6 auf, welche je über eine Radioantenne 7 verfügen über welche die Kommunikationszellen 6 untereinander und weiter auch Benutzersysteme des zelluaren Kommunikationsnetzes 3 mit dem zellularen Kommunikationsnetz 3 über Radiowellen verbindbar sind. Dabei deckt ein einzelnes Exemplar der Kommunikationszellen 6 jeweils ein gewisses geographisches Gebiet ab; die Kommunikationszellen 6 sind derart angeordnet, dass sie zusammen ein grösseres, zusammenhängendes Gebiet abdecken.

Die Anzahl der mit dem zellularen Kommunikationsnetz 3 verbundenen Exemplare der Schnittstelleneinheit 1 ist grundsätzlich nicht begrenzt; sie richtet sich in erster Linie nach der Übertragungskapazität des zellularen Kommunikationsnetzes 3. Zur Vereinfachung der Darstellung sind in der Fig. 1 lediglich zwei Exemplare der Schnittstelleneinheit 1 dargestellt.

Eine Station 8 ist über eine Verbindungseinrichtung 9 mit dem zellularen Kommunikationsnetz 3 verbunden. Die Verbindungseinrichtung 9 ist ein verfügbarer Datenkommunikationskanal über eine Draht-, Licht- oder Radiowellenverbindung.

Die Schnittstelleneinheit 1 dient der sicheren und zuverlässigen bidirektionalen Übertragung von digitalen Datenströmen zwischen der Station 8 und einem oder mehreren mit der Schnittstelleneinheit 1 verbundenen Exemplar bzw. Exemplaren des Modules 5 über das zellulare Kommunikationsnetz 3.

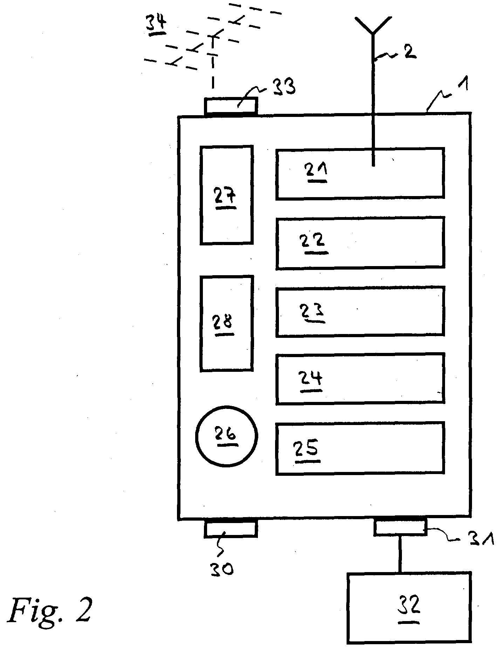

Eine vorteilhafte Ausführung der Schnittstelleneinheit 1 (Fig. 2) weist ein erstes mit der Antenne 2 verbundenes Modul 21 zum Senden und Empfangen von Radiosignalen, ein zweites Modul 22 zum Entzerren von Radiosignalen, ein drittes Modul 23 zur Authentifizierung von Kommunikationspartnern, ein viertes Modul 24 zur Verschlüsselung und Entschlüsselung von Datenströmen und ein fünftes Modul 25 zur Ausbildung und Verschachtelung von Datenpakten auf. Die Schnittstelleneinheit 1 umfasst zudem mindestens eine Prozessoreinheit 26, einen ersten Speicherbereich 27 mit Read Only Memory (ROM) und einen zweiten Speicherbereich 28 mit Random Access Memory (RAM), welcher mit Vorteil mindestens zum Teil als nichtflüchtiger Speicher (Nonvolatile RAM) verwirklicht ist.

Eine Einrichtung zum Entzerren von Radiosignalen wird in der Übertragungstechnik auch Equalizer genannt.

Die Schnittstelleneinheit 1 weist eine Datenschnittstelle 30 für das Verbindungsmittel 4 (Fig. 1) auf, über welches die Schnittstelleneinheit 1 mit dem Modul 5 (Fig. 1) verbunden wird.

Die Datenschnittstelle 30 ist beispielsweise eine bidirektionale serielle Datenschnittstelle.

Die Schnittstelleneinheit 1 umfasst ferner ein erstes Anschlusselement 31 für eine Spannungsquelle 32 und mit Vorteil auch ein zweites Anschlusselement 33 für eine in der Zeichnung gestrichelt dargestellte Hochleistungsantenne 34, welches mit Vorteil eine Antenne mit strahlungsgekoppelten Stäben - also eine sogenannte YAGI-UDA-Antenne - ist.

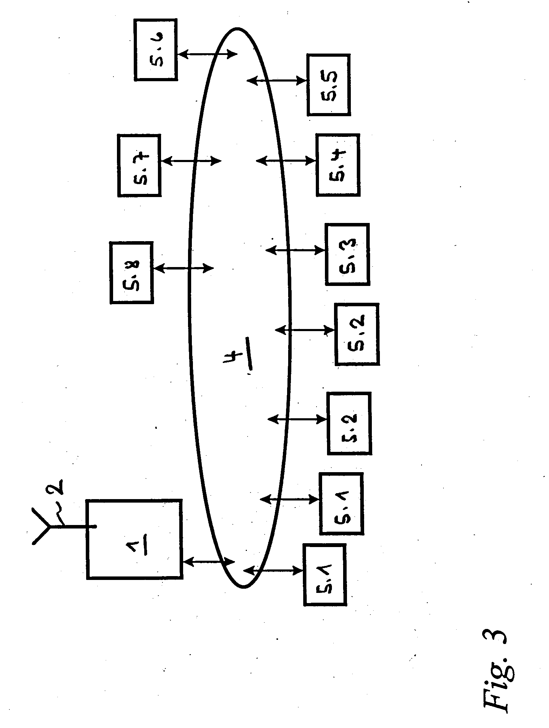

In der Fig. 3 ist das Verbindungsmittel 4 als Datenkommunikationsnetz verwirklicht, über das die Schnittstelleneinheit 1 mit verschiedenartigen Ausführungen des Modules 5 verbunden ist. Eine erste Ausführung 5.1 des Modules 5 ist ein Elektrizitätszähler, dessen Messwerte über die Schnittstelleneinheit 1 für Verrechnungszwecke auf die Station 8 (Fig. 1) übertragbar sind. Das Übertragen der Messwerte wird typischerweise von der Station 8 oder von der ersten Ausführung 5.1 ausgelöst. Es versteht sich jedoch von selbst, dass die Schnittstelleneinheit 1 derart ausgestaltbar ist, dass das Übertragen der Messwerte auch durch die Schnittstelleneinheit 1 ausgelöst werden könnte.

Eine zweite Ausführung 5.2 des Modules 5 ist ein Gaszähler, dessen Messwerte über die Schnittstelleneinheit 1 auf die Station 8 (Fig. 1) übertragbar sind.

Eine dritte Ausführung 5.3 des Modules 5 ist ein Heizungsregler, dessen Parameter und dessen Funktionsweise von der Station 8 (Fig. 1) aus veränderbar bzw. programmierbar sind.

Eine vierte Ausführung 5.4 des Modules 5 ist ein Terminal eines Gebäudeleitsystems, dessen Funktionsweise von der Station 8 (Fig. 1) aus veränderbar oder programmierbar ist, und von dem Betriebsdaten, Prozessgrössen oder Messwerte auf die Station 8 übertragbar sind.

Eine fünfte Ausführung 5.5 des Modules 5 ist ein Payphone.

Eine sechste Ausführung 5.6 des Modules 5 ist ein Alarmsystem, wobei das Alarmsystem von der Station 8 (Fig. 1) aus steuerbar ist und Alarmmeldungen auf die Station 8 übertragbar sind.

Eine siebte Ausführung 5.7 des Modules 5 ist ein Pay-TV-Apparat, für den über die Schnittstelleneinheit Programmangebote angefordert und/oder abgegolten werden.

Eine achte Ausführung 5.8 des Modules 5 ist ein Verkaufsautomat von Waren oder Dienstleistungen, die über die Schnittstelleneinheit abgegolten werden.

Bei Bedarf verfügt das Modul 5 über eine Einrichtung zum Lesen und Verändern von Daten einer Chipkarte, welche zur Identifizierung eines Benutzers oder zur Abgeltung von Waren oder Dienstleistungen verwendet wird.

Grundsätzlich ermöglicht die mit dem Modul 5 verbundene Schnittstelleneinrichtung 1 ein Steuern des Modules von der Station 8 aus über das zellulare Kommunikationsnetz 3, wobei hier der Begriff "Steuern" sehr breit gefasst ist und beispielsweise Programmieren, Parametrieren und Abfragen von Daten umfasst.

Es zeigt sich, dass beim Übertragen eines Datenstromes in einem Funknetz oftmals mehrere nahe beieinanderliegende Bits des Datenstromes verfälscht werden. Der derart verfälschte Datenstrom ist in einem Empfänger oft nicht mehr rekonstruierbar, so dass die Übertragung wiederholt werden muss, was Zeit kostet und das Funknetz zusätzlich überlastet.

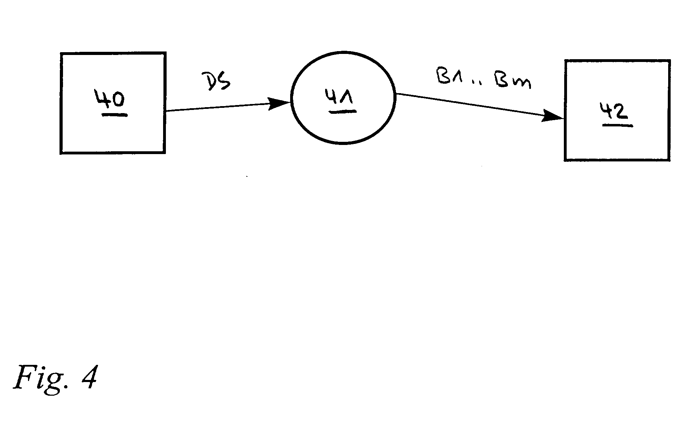

Die Fig. 4 zeigt ein Datenflussdiagramm zu einem vorteilhaften Aufbereitungsverfahren für einen durch das Modul 5 (Fig. 1) über das Verbindungsmittel 4 an die Schnittstelleneinheit 1 übergebenen Datenstrom DS. Im Aufbereitungsverfahren wird der Datenstrom DS in eine Form transformiert, in welchem die bei einer anschliessenden Übertragung im zellularen Kommunikationsnetz 3 erwarteten Fehler bis auf ein vertretbares Mass in einer Empfangseinrichtung korrigierbar werden.

In der für die Zeichnung gewählten, aus der Literatur bekannten Darstellungsart für Datenflussdiagramme (dazu beispielsweise D. J. Hatley, I. A. Pirbhai: Strategies for Real-Time System Specification, Dorset House, NY 1988) bedeutet ein Kreis eine Aktivität, ein Viereck ein angrenzendes System und ein Pfeil einen Kanal zur Übertragung von Daten und/oder Ereignissen, wobei die Pfeilspitze in die wesentliche Datenflussrichtung zeigt. Ein Datenspeicher, der allgemein mehreren Aktivitäten zur Verfügung steht, ist durch zwei gleich lange, parallele Linien dargestellt. Mit dem Begriff Datenspeicher wird hier eine Einrichtung zur Speicherung von Daten bezeichnet, welche auch Mittel zur Verhinderung von Konflikten bei zeitlich parallelem Zugriff mehrerer Aktivitäten auf die Daten aufweist. Im weiteren ist beispielsweise eine Anordnung aus zwei durch einen Kanal verbundenen Aktivitäten mit einer einzigen Aktivität, welche alle Aufgaben der besagten beiden Aktivitäten erfüllt, äquivalent. Eine Aktivität ist allgemein in mehrere über Kanäle und/oder Datenspeicher verbundene Aktivitäten zerlegbar. Weitere in der Literatur der Datenflussdiagramme benutzte Bezeichnungen sind "Terminator" für das angrenzende System, "Process" oder "Task" für die Aktivität, "Data Flow" oder "Channel" für den Kanal und "Pool" oder "Data Pool" für den Datenspeicher.

Eine Aktivität kann als elektronische Schaltung oder auch softwaremässig als Prozess, Programmstück oder Routine verwirklicht werden, wobei die Aktivität bei einer softwaremässigen Ausführung auch die Zielhardware umfasst.

Der in einem Systemteil 40 der Schnittstelleneinheit 1 anfallende digitale Datenstrom DS wird in einer Aktivität 41 in mehrere Pakete P1 bis Pn unterteilt. Die einzelnen Bits eines Paketes Pi werden auf mehrere Dateneinheiten B1 bis Bm, sogenannte Bursts verteilt und einem weiteren Systemteil 42 übergeben.

Die Aktivität 41 führt also auf den digitalen Datenstrom DS eine Verschachtelungs-Transformation aus, in der die Bits des Datenstromes DS auf mehrere Dateneinheiten B1 bis Bm verteilt werden. Die Dateneinheiten B1 bis Bm umfassen nicht nur die Bits des Datenstromes DS.

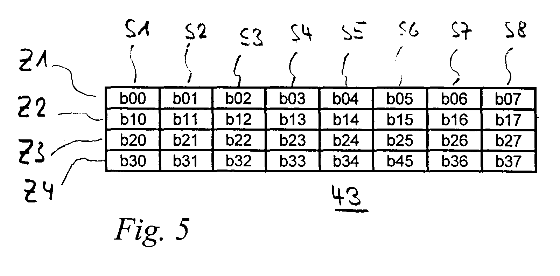

Fig. 5 zeigt eine Tabelle 43 mit vier Zeilen Z1 bis Z4 und acht Spalten S1 bis S8 zur Veranschaulichung des Prinzips der durch die Aktivität 41 ausgeführten Verschachtelungs-Transformation. Der Datenstrom DS wird zeilenweise in einen Speicher 43 geschrieben. Im Beispiel umfasst der Datenstrom DS die Bits b00 bis b07 der ersten Zeile Z1, die Bits b10 bis b17 der zweiten Zeile Z2, die Bits b20 bis b27 der dritten Zeile Z3 und die Bits b30 bis b37 der vierten Zeile Z4. Zur Bildung der Dateneinheiten B1 bis Bm, wobei m hier die Spaltenzahl acht ist, werden die im tabellenartig strukturierten Speicher 43 spaltenweise ausgelesen. In einer ersten Dateneinheit B1 werden die Bits b00 bis b30 der ersten Spalte S1 angeordnet, in einer zweiten Dateneinheit B2 die Bits b01 bis b31 usw. Die letzte Dateneinheit B8 weist die Bits b07 bis b037 der achten Spalte S8 auf.

Die Anzahl Dateneinheiten auf welche die Bits des Datenstromes DS aufgeteilt werden, wird als Verschachtelungtiefe bezeichnet. Im Beispiel beträgt die Verschachtelungstiefe acht.

Die Verschachtelungs-Transformation wird in der Übertragungstechnik auch als Interleaving und die Verschachtelungstiefe entsprechend Interleave Depth.

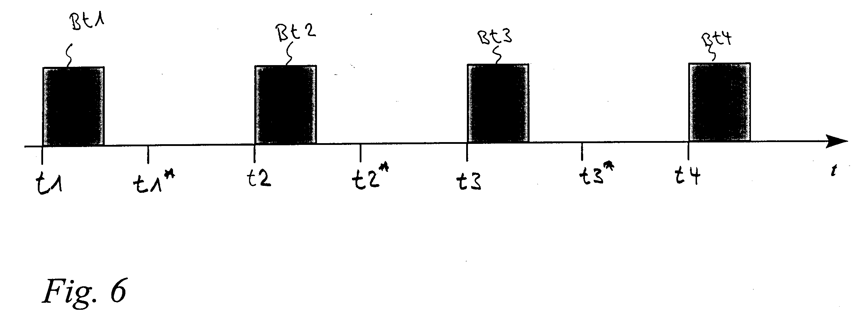

In der Fig. 6 sind mehrere, vom Modul 21 (Fig. 2) zum Senden und Empfangen von Radiosignalen zeitlich nacheinander empfangene Dateneinheiten Bt1 bis Bt4 auf einer Zeitachse t dargestellt. In der stationär angeordneten Schnittstelleneinheit 1 wird das Modul 22 zum Entzerren von Radiosignalen mit Vorteil so verwirklicht, dass Interferenzen, welche in benutzbaren Modulationsverfahren auftreten, beseitigt werden. Eine vorteilhafte Signalgewinnung, welche minimale Prozessorleistung erfordert wird ermöglicht, indem das Modul 22 bei der Analyse und Verarbeitung einer im Zeitpunkt t3 anfallenden Dateneinheit Bt3 auch Informationen benutzt, welche aus Dateneinheiten Bt1 und Bt2 gewonnen wurden, die vor der aktuell Verarbeiteten Dateneinheit Bt3 empfangen worden sind. So sind hier nach einem Zeitpunkt t2* - also bevor die Dateneinheit Bt3 empfangen wird - ausgewählte Informationen aus der Analyse und der Verarbeitung der Dateneinheit Bt2 verwendbar. Ausgewählte, bei der Verarbeitung der aktuellen Dateneinheit Bt3 anfallenden Information wird beim Analysieren und Verarbeiten einer nach der Dateneinheit Bt3 empfangenen und Dateneinheit Bt4 nutzbar.

Insbesondere sogenannte Inter-Symbol-Interferenzen beim sogenannten Gaussian Minimum-Shift Keying, das beim GSM angewendet wird, sind durch das beschriebene adaptive Verfahren ausräumbar, welches bei der Analyse und Verarbeitungen einer Dateneinheit auch Informationen von mindestens einer zu einem früheren Zeitpunkt analysierten und verarbeiteten Dateneinheit verwendet.

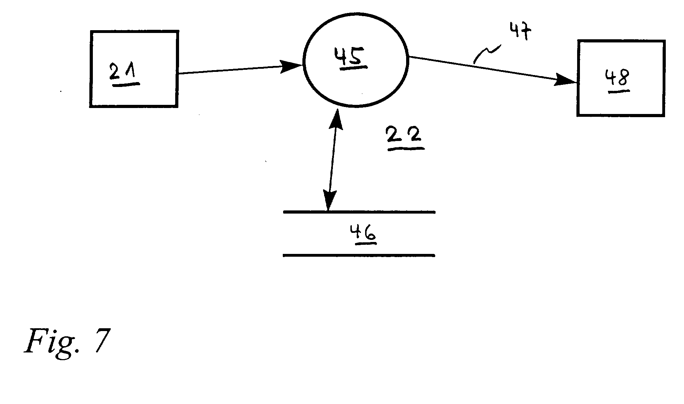

Das Modul 22 zum Entzerren von Radiosignalen umfasst vorteilhafterweise eine weitere Aktivität 45 (Fig. 7) und eine Speichereinheit 46, in welcher gewisse bei der Analyse und Verarbeitung anfallende Information speicherbar und zu einem späteren Zeitpunkt nutzbar ist. Die Aktivität 45 generiert aus den vom Modul 21 zum Senden und Empfangen von Radiosignalen zeitlich nacheinander gelieferten Dateneinheiten Bt1 bis Bt4 ein digitales Signal 47, das einem dem Modul 21 nachgeschalteten Systemteil 48 übergeben wird.

Die erfindungsgemässe Schnittstelleneinheit dient der bidirektionalen Übertragung von digitalen Datenströmen zwischen einem - oder mehreren - mit der Schnittstelleneinheit verbundenen Gerät - bzw. Geräten - und einer über ein zellulares Kommunikationsnetz erreichbaren Station.

Ein digitaler Datenstrom weist hier unterschiedliche Längen auf und beinhaltet typischerweise Steuerbefehle, Zustandsinformation oder eine Reihe von Messdaten.

Die höhere Anzahl von Schnittstelleneinheiten wird erwartungsgemäss zu einer höheren Belastung des zellularen Netzes führen, was die Fehlerrate erhöht. Dadurch erwartet man mindestens, dass eine höhere Verschachtelungstiefe erforderlich ist, um die nötige Übertragungsqualität zu erreichen. Es hat sich jetzt gezeigt, dass die Kombination der Eigenschaften der beanspruchten Schnittstelleneinheit, inklusive der genannten niederen Werte für die Verschachtelungstiefe und die paketweise Übertragung hier trotzdem ausreichen und zudem die geforderten Kostensenkungen ermöglichen.

Üblicherweise braucht man bei zellularen Netzen gewisse Massnahmen um zu erreichen, dass Teilnehmerstationen, welche sich im Grenzbereich von zwei oder mehreren Zellen befinden, ihre Daten an die ausgewählte Zelle übermittelt werden. Zeitlich gibt es Störungen beispielsweise durch Strassenverkehr, Wetter oder Bewegung der Teilnehmerstation. Diese gewissen Massnahmen umfassen eine Übergabemöglichkeit, um die Daten über den zeitlich optimal erreichbare Zelle auszutauschen. Auch sind Daten paketweise mit Adressinformation von Sender und/oder Empfänger übertragbar, so dass unabhängig vom Weg eine zuverlässige Übertragung gewährleistet ist. Es wurde gefunden, dass eine paketweise Übertragung in Kombination mit insbesondere einer Verschlüsselung der übertragenen Daten für erfindungsgemässen Anwendungen ausreichend ist. Insbesondere ist die genannte Übergabemöglichkeit nicht erforderlich. Damit wird wiederum eine Vereinfachung der Schnittstelleneinheit und eine damit verbundene Senkung der Fertigungskosten erreichbar.

Für eine Datenübertragung von Geräten innerhalb eines Gebäudes oder innerhalb einer gebäudeähnlichen Struktur wird meistens ein Schutz der Privatsphäre gefordert. Die durch Sicherheitsbedingungen schon erforderliche Verschlüsselung und paketweise Übertragung unterstützt auch für die zum Schutz der Privatsphäre erforderliche Anonymität, selbst unter den schwierigen, durch die grosse Benutzerzahl hervorgerufenen Bedingungen, denn sie sichert auch die Authentizität der Schnittstelleneinheit und der Station. Darüber hinaus werden die Möglichkeiten für eine Korrektur derjenigen Übertragungsfehler optimiert, welche bei der Übertragung der Datenströme über das zellulare Kommunikationsnetz mit hoher Wahrscheinlichkeit auftreten.

Die hohen Anforderungen bezüglich der Korrektur der erwarteten Übertragungsfehler im Datenstrom sind dann erreichbar, wenn der Datenstrom in kleinere Datenpakete aufgeteilt und die Datenpakete vor der Übertragung in Dateneinheiten angeordnet und die Dateneinheiten auf eine gewisse Art verschachtelt werden.

Durch die besagte Aufteilung und Anordnung in Dateneinheiten, verbunden mit der Verschachtelung der Dateneinheiten, wird für die Datenkommunikation zwischen der Schnittstellenschaltung und der Station ein Verfahren mit sogenanntem Mehrfachzugriff im Zeitmultiplex ermöglicht, was auch unter dem Begriff "time-division multiple access" bekannt ist.

Die Tiefe der Verschachtelung ist derart optimiert, dass einerseits die hohe Anforderungen an die Korrektur der Übertragungsfehler erreichbar sind, jedoch andererseits der Bedarf an Speicherplatz und Prozessorleistung möglichst klein gehalten wird.

Dadurch, dass der für die Verschachtelung der Dateneinheiten erforderliche Speicherplatz möglichst klein gehalten ist, wird die Grösse des in der Schnittstelleneinheit erforderlichen Arbeitsspeichers minimal, womit einerseits die Herstellungskosten der Schnittstelleneinheit möglichst gering und zudem die Zuverlässigkeit der Schnittstelleneinheit insgesamt erhöht wird.

Hohe Anforderungen werden auch an eine Einrichtung zum Empfangen und Auswerten der vom zellularen Kommunikationsnetz ausgesendeten Radiowellen gestellt. Der Aufwand an Mitteln für die Auswertung eines empfangenen Signales kann dann besonders klein gehalten werden, wenn die erforderliche Entzerrereinrichtung - die in der Radiotechnik auch mit dem Begriff Eqalizer bezeichnet wird - so ausgebildet ist, dass sie adaptiv arbeitet. Eine vorteilhafte Ausgestaltung der adaptiven Entzerrereinrichtung verwendet zur Gewinnung eines Nutzsignales aus einer empfangenen Dateneinheit auch Informationen von Dateneinheiten, welche zu einem früheren Zeitpunkt empfangen wurden. Bei der Verarbeitung empfangener Dateneinheiten werden Parameter der Entzerrereinrichtung entsprechend den herrschenden Empfangsbedingungen laufend angepasst, indem Informationen von einer oder mehreren zu einem früheren Zeitpunkt verarbeiteten Dateneinheit bei der Verarbeitung einer Dateneinheit berücksichtigt werden. Die vorteilhaft ausgestaltete adaptive Entzerrereinrichtung hat den Vorteil, dass die zur Entzerrung erforderliche Prozessorleistung auch dann klein gehalten werden kann, wenn die Schnittstelleneinheit in einem Gebiet angeordnet ist, in welchem Radiowellen stark gestört werden. Es zeigt sich, dass die adaptive Entzerrereinrichtung insbesondere dann mit Vorteil einsetzbar ist, wenn Veränderungen, welche die Störungen der Radiowellen im Gebiet der stationär angeordneten Schnittstelleneinheit hervorrufen, relativ langsam erfolgen.

Dadurch, dass die Entzerrereinrichtung adaptiv arbeitet ist die in der Schnittstelleneinheit insgesamt erforderliche Prozessorleistung minimierbar, wodurch einerseits Kosten gespart und andererseits die Zuverlässigkeit der eingesetzten Mittel erhöht wird.

Dadurch, dass die vorgeschlagenen Massnahmen zur Erreichung der erforderlichen Rückgewinnungs- und Korrekturqualität für die übertragenen Datenströme konsequent darauf hinzielen, Speicherplatz und Prozessorleistung gering zu halten, kann die Schnittstelleneinheit im wesentlichen mit einem einzigen Chip, vorteilhafterweise einem ASIC, verwirklicht werden.

Dadurch dass die stationär angeordnete Schnittstelleneinheit mit einer Antenne mit strahlungsgekoppelten Stäben, einer sogenannten YAGI-UDA-Antenne, ausrüstbar ist, ist auch dann eine zuverlässige Funktionsweise der Schnittstelleneinheit erreichbar, wenn die stationär angeordnete Schnittstelleneinheit in einem Gebiet mit relativ schlechten Übertragungsbedingungen zum zellularen Kommunikationsnetz angeordnet ist.

## Patentansprüche

1. Schnittstelleneinheit (1) zur bidirektionalen Übertragung von digitalen Daten zwischen der Schnittstelleneinheit (1) und einer über ein zellulares Kommunikationsnetz (3) erreichbaren Station (8) über das zellulare Kommunikationsnetz (3), mit einer Einrichtung (2, 21) zum Senden und Empfangen von Radiowellen und mit ersten Mitteln (23), durch die eine Authentifizierung der Kommunikationspartner erreichbar ist,
**gekennzeichnet**
durch zweite Mittel (26, 27, 28, 24), durch die eine Verschlüsselung und Entschlüsselung von übertragenen Daten durchführbar ist,
durch dritte Mittel (26, 27, 28, 25), mit denen digitale Daten paketweise über das zellulare Kommunikationsnetz übertragbar sind,
wobei vierte Mittel (25; 41, 43) verfügbar sind, durch welche die Daten in mehrere Dateneinheiten (Bursts) aufteilbar und verschachtelbar (interleaved) sind und
wobei die Verschachtelungstiefe (interleaving depth) mindestens zwei, jedoch kleiner oder gleich neun ist, und weiter
durch fünfte Mittel (30), durch welche eine weitere bidirektionale Datenverbindung zwischen der Schnittstelleneinheit (1) und einem weiteren Gerät (5) aufbaubar ist, so dass das weitere Gerät (5) über die besagte Datenverbindung bedienbar ist.

2. Schnittstelleneinheit nach Anspruch 1, dadurch gekennzeichnet, dass die vierten Mittel (25; 41, 43) derart ausgestaltet sind, dass die Verschachtelungstiefe kleiner als sechs jedoch mindestens zwei ist.

3. Schnittstelleneinheit nach einem vorangehenden Anspruch, gekennzeichnet durch Mittel (24) zur Verschlüsselung und Entschlüsselung von Daten, die über die bidirektionale Datenverbindung zwischen der Schnittstelleneinheit (1) und dem weiteren Gerät (5) übertragbar sind.

4. Schnittstelleneinheit nach einem vorangehenden Anspruch, dadurch gekennzeichnet,
dass die Schnittstelleneinheit (1) zur Gewinnung eines Nutzsignales aus einem von einer Antenne (2; 34) gelieferten Signal eine Empfängereinrichtung mit einer adaptiven Equalizereinrichtung bzw. Entzerrereinrichtung (22; 45, 46) aufweist,
wobei die adaptive Equalizereinrichtung (22; 45, 46) so ausgebildet ist, dass zur Gewinnung des Nutzsignales aus einer übertragenen Dateneinheit (Burst) auch Information aus einer oder mehreren zu einem früheren Zeitpunkt empfangenen Übertragungseinheit (Burst) bzw. Übertragungseinheiten verwendbar sind.

5. Schnittstelleneinheit nach einem der Ansprüche 1 bis 4, dadurch gekennzeichnet, dass die fünften Mittel derart ausgestaltet sind, dass die Schnittstelleneinheit sequentiell mit mehreren Geräten verbindbar ist.

6. Schnittstelleneinheit nach einem der Ansprüche 1 bis 4, dadurch gekennzeichnet, dass die fünften Mittel derart ausgestaltet sind, dass die Schnittstelleneinheit mit einer Einrichtung zur Steuerung und oder Überwachung von Geräten oder Verbrauchern verbindbar ist.

7. Schnittstelleneinheit nach einem der Ansprüche 1 bis 4, dadurch gekennzeichnet, dass die fünften Mittel derart ausgestaltet sind, dass die Schnittstelleneinheit mit einer Einrichtung zur Minimierung von Lastspitzen verbindbar ist.

8. Schnittstelleneinheit nach einem der Ansprüche 1 bis 4, dadurch gekennzeichnet, dass die fünften Mittel derart ausgestaltet sind, dass die Schnittstelleneinheit mit einem Gebäudeleitsystem verbindbar ist, wobei die übertragbaren Daten Prozessdaten oder Parameter des Gebäudeleitsystems sind.

9. Schnittstelleneinheit nach einem der Ansprüche 1 bis 4, dadurch gekennzeichnet, dass die fünften Mittel derart ausgestaltet sind, dass die Schnittstelleneinheit mit einer Einrichtung zum Verkaufen oder Abgelten einer Dienstleistung oder Ware verbindbar ist.

10. Schnittstelleneinheit nach Anspruch 9, dadurch gekennzeichnet, dass die Einrichtung zum Verkaufen oder Abgelten einer Dienstleistung oder Ware ein Payphonapparat ist.

11. Schnittstelleneinheit nach einem der Ansprüche 1 bis 4, dadurch gekennzeichnet, dass die fünften Mittel derart ausgestaltet sind, dass die Schnittstelleneinheit mit einem oder mehreren Exemplaren einer Einrichtung zur Erfassung von Messdaten verbindbar ist, so dass erfasste Messdaten über das zellulare Kommunikationsnetz ablesbar und auf die Station für Verrechnungszwecke übertragbar sind.

12. Schnittstelleneinheit nach einem der Ansprüche 1 bis 4, dadurch gekennzeichnet, dass die fünften Mittel derart ausgestaltet sind, dass die Schnittstelleneinheit mit einer Einrichtung zum Beziehen von Televisionsangeboten verbindbar ist.

13. Schnittstelleneinheit nach einem der Ansprüche 9, 10, 11 oder 12 dadurch gekennzeichnet, dass eine Einrichtung zum Behandeln einer Chip-Karte verfügbar ist, über welche bezogene Waren oder Dienstleistungen abgeltbar sind.

14. Schnittstelleneinheit nach einem vorangehenden Anspruch, gekennzeichnet durch Mittel zur Ankoppelung einer Antenne mit strahlungsgekoppelten Stäben (einer sogenannte YAGI-UDA-Antenne), wobei die Schnittstelleneinheit durch die Antenne mit dem zellularen Kommunikationsnetz verbindbar ist.

15. Schnittstelleneinheit nach einem vorangehenden Anspruch, gekennzeichnet durch eine selbsttätig nachladbare Spannungsquelle, mit der die Schnittstelleneinheit verbindbar ist und durch welche die Schnittstelleneinheit permanent mit elektrischer Energie versorgbar ist.

16. Schnittstelleneinheit nach Anspruch 15, dadurch gekennzeichnet, dass die Spannungsquelle von einem elektrischen Versorgungsnetz gespeist ist, welches über das weitere mit der Schnittstelle verbundene Gerät erreichbar ist.
